# EUROPEAN PATENT APPLICATION

(11) **EP 4 556 284 A1**
(43) Date of publication of application: **21.05.2025**
(21) Application number: 22964540.3
(22) Date of filing: 02.11.2022
(51) Int. Cl.: B60K 35/00, G02B 30/40

(54) **VEHICLE DISPLAY DEVICE**

(71) Applicant: LG Electronics Inc., Yeongdeungpo-gu Seoul 07336 (KR)
(72) Inventor: SONG, Seunghwan, Seoul 06772 (KR); KIM, Hansoo, Seoul 06772 (KR)
(74) Representative: Vossius & Partner Patentanwälte Rechtsanwälte mbB
(86) International application number: PCT/KR2022/017041
(87) International publication number: WO 2024/096161

(57) **Abstract**

The present invention relates to a vehicle display device comprising: a light synthesizer which reflects incident light to form a first image, transmits incident light to form a second image, and synthesizes the first and second images to form a synthesized image; at least one first display which is disposed on the front side of the light synthesizer and outputs, to the light synthesizer, an image to be reflected; at least one second display which is disposed on the rear side of the light synthesizer and outputs, to the light synthesizer, an image to be transmitted; a position changer which moves at least one of the first and second displays in a direction close to or away from the light synthesizer; and a processor which controls the position changer to move at least one of the first and second displays such that, among the first and second images, one including a background image and the other including image information to be displayed overlappingly with the background image are away from or close to each other.

## Description

### Technical Field

The present disclosure relates to a vehicle display that displays various information related to a vehicle, and more particularly, to a vehicle display device that can display image information having a stereoscopic depth direction movement.

### Background Art

Conventionally, in the case of a driver seat of a vehicle, that is, a cockpit, a windshield glass required to allow a driver to look ahead is disposed, and a space must be secured for the driver's movement around the driver seat of the vehicle to allow the driver to operate the vehicle such as a steering wheel or pedals. Therefore, unlike conventional displays with a standard ratio (e.g., 4:3 or 16:9), vehicle displays have the form of a strip-shaped display that extends long in a horizontal direction, and due to the characteristics of such vehicle displays, there is a problem in that it is extremely difficult to produce a large-screen display above a predetermined size.

Meanwhile, unlike conventional technologies that only provide various gauge information related to the vehicle, current vehicle control technology may provide various information such as navigation information, augmented reality (AR), and mixed reality (MR) to a driver or passenger. Accordingly, social needs have been introduced to provide three-dimensional image information to a driver or passenger.

Meanwhile, due to the social needs, a two-layered display method has been developed that displays three-dimensional image information using two layers overlapping each other. However, the two-layered display method may display a three-dimensional image using image information displayed on an overlapping fixed screen, and only express a depth by adjusting a size of the displayed image information, and thus there is a problem in that it is difficult to express a real 3D effect.

### Disclosure of Invention

### Technical Problem

The present disclosure aims to solve the foregoing problems and other problems, and an aspect thereof is to provide a vehicle display device capable of showing a substantial depth using a semi-transmissive mirror and a display disposed to be movable.

### Solution to Problem

In order to achieve the foregoing or other objectives, according an aspect of the present disclosure, a display device according to an embodiment of the present disclosure may include
a light synthesizer that synthesizes a first image formed by reflecting incident light and a second image formed by transmitting incident light to form an image, at least one first display disposed at a front surface side of the light synthesizer to output an image reflected by the light synthesizer, at least one second display disposed at a rear surface side of the light synthesizer to output an image transmitted by the light synthesizer, a position changer that moves at least one of the first and second displays in a direction closer to or away from the light synthesizer, and a processor that controls the position changer to move at least one of the first and second displays such that either one of the first image and the second image, which includes a background screen, and the other one, which includes image information displayed to overlap the background screen are away from or closer to each other.

In one embodiment, the display device may include a housing that accommodates the light synthesizer and the first and second displays, and has an opening surface disposed on one side thereof to face the light synthesizer from a preset driver's eye height, wherein the first display is disposed at an upper or lower side of an opening direction of the opening surface, and the second display is disposed so as to face the opening direction.

In one embodiment, of the first and second displays, a background display that displays the background screen may be a fixed display, wherein of the first and second displays, a foreground display that displays image information displayed to overlap the background screen is disposed to be movable according to a driving of the position changer.

In one embodiment, the foreground display may be the second display, wherein the position changer moves the second display in a direction closer to or away from a rear surface of the light synthesizer along the opening direction.

In one embodiment, the foreground display may be the first display, wherein the position changer moves the first display in a direction perpendicular to the opening direction so as to move closer to or away from a front surface of the light synthesizer.

In one embodiment, the first display may be disposed at a lower side of the opening direction of the opening surface, and disposed to be inclined at a preset angle with respect to the opening direction.

In one embodiment, the light synthesizer may be a semi-transmissive mirror including a front surface formed with a reflective surface on which incident light is reflected, and a rear surface formed with a transmissive surface through which incident light is transmitted, wherein the first image is a virtual image formed by reflecting incident light on a front surface of the semi-transmissive mirror, and the second image is a real image formed by transmitting incident light on a rear surface of the semi-transmissive mirror.

In one embodiment, a light transmittance of the semi-transmissive mirror may be adjusted so as to allow a brightness of the virtual image and a brightness of the real image to be the same.

In one embodiment, either one of the first and second displays may be a background display having a horizontal length corresponding to a front surface of a driver seat and a front surface of a passenger seat of the vehicle, and the other one of the first and second displays may be a foreground display having a horizontal length corresponding to either one of the front surface of the driver seat or the front surface of the passenger seat.

In one embodiment, the position changer may be disposed to further move the foreground display in one axial direction formed along the light synthesizer, wherein the processor controls the position changer to move the foreground display in one axial direction formed along the light synthesizer so as to allow the foreground display to be positioned at either one of the front surface of the driver seat or the front surface of the passenger seat, and move the foreground display in a direction closer to or away from the light synthesizer so as to allow image information displayed on the foreground display to have a stereoscopic effect according to a movement in a depth direction.

In one embodiment, the display device may include a first foreground display disposed on a front surface of the driver seat and a second foreground display disposed on a front surface of the passenger seat, wherein the processor separately controls the first and second foreground displays so as to display separate image information having a different depth.

In one embodiment, the display device may include at least one first display, and at least one second display disposed alternately with the at least one first display with respect to the light synthesizer, as a background display that displays the background screen, wherein at least one first image formed by the at least one first display and at least one second image formed by the at least one second display are connected to each other to display the background screen.

In one embodiment, the display device may include at least one second display forming at least one second image to overlap the at least one first image, respectively, or at least one first display forming at least one first image to overlap the at least one second image, respectively, as a foreground display that displays image information having a stereoscopic effect according to a movement in a depth direction with respect to the background screen.

In one embodiment, the at least one first display may be disposed to be spaced apart by a predetermined distance from a reflective surface of the light synthesizer so as to form each first image at a distance equal to a distance between each second image from a transmissive surface of the light synthesizer, wherein the at least one first image and the at least one second image are aligned side by side along one axis formed with respect to the light synthesizer so as to be spaced apart by the same distance from the transmissive surface of the light synthesizer.

In one embodiment, the at least one first display and the at least one second display may be disposed alternately with respect to the light synthesizer so as to allow an edge area of the first display that displays an image corresponding to the first image and an edge area of the second display that displays an image corresponding to the second image to overlap on one axis formed with respect to the light synthesizer.

In one embodiment, the first display may output a left-right reversed image.

In one embodiment, the housing may be at least part of an internal frame of a vehicle constituting at least one of a front of a driver seat and a front of a passenger seat of the vehicle.

In one embodiment, the display device may further include at least one third display disposed between the at least one first display and the light synthesizer or between the at least one second display and the light synthesizer, wherein the position changer is disposed to further move the third display in a direction closer to or away from the light synthesizer, and the processor controls the position changer to allow the third display to move away from or closer to at least one of the first image and the second image.

In one embodiment, the at least one third display may be a transparent display.

### Advantageous Effects of Invention

The effects of a display device and a control method of the device according to the present disclosure will be described as follows.

According to at least one of embodiments of the present disclosure, the present disclosure may overlap a real image transmitted through a semi-transmissive mirror and a virtual image reflected through the semi-transmissive mirror to each other, thereby allowing image information displayed on a plurality of displays to overlap. In addition, at least one of the plurality of displays forming the real and virtual images may be formed so as to change a distance spaced from the semi-transmissive mirror, thereby changing a distance between the overlapping real and virtual images. Therefore, a substantial depth may be provided between images formed from different displays, thereby having an effect of providing more realistic 3D image information.

### Brief Description of Drawings

FIG. 1 is a block diagram showing a structure of a display device according to an embodiment of the present disclosure.
FIG. 2 is a cross-sectional diagram showing an X-axis cross-section of a display device according to a first embodiment of the present disclosure.
FIG. 3 is a cross-sectional diagram showing an X-axis cross-section of another display device according to a first embodiment of the present disclosure.
FIG. 4 is an exemplary diagram showing an example of virtual and real images formed from first and second displays in a display device according to the first embodiment of the present disclosure.
FIG. 5 is a perspective diagram of a display device according to a first embodiment of the present disclosure, and a Y-axis cross-sectional diagram in which virtual and real images are displayed to overlap in a Z-axis direction.
FIG. 6 is a cross-sectional diagram showing an X-axis cross-section of a display device according to a second embodiment of the present disclosure.
FIG. 7 is a perspective diagram of a display device according to a second embodiment of the present disclosure, and a Y-axis cross-sectional diagram in which virtual and real images are displayed to overlap in the Z-axis direction.
FIGS. 8 and 9 are diagrams showing examples of implementing a display device according to a first embodiment of the present disclosure by including one first display forming a virtual image and at least one second display forming a real image.
FIG. 10 is a diagram showing an example of a display device according to an embodiment of the present disclosure that provides 3D image information by overlapping two real images formed from displays disposed to be movable in an extended integrated display area including two virtual images and one real image.
FIG. 11 is a cross-sectional diagram showing an X-axis cross-section of display devices according to third embodiments of the present disclosure.

### Mode for the Invention

It should be noted that the technical terms used herein are merely used to describe a specific embodiment, but are not intended to limit the present disclosure. In addition, a singular expression used herein may include a plural expression unless clearly defined otherwise in the context. A suffix "module" or "unit" used for elements disclosed in the following description is merely intended for easy description of the specification, and the suffix itself is not intended to have any special meaning or function.

As used herein, terms such as "comprise" or "include" should not be construed to necessarily include all elements or steps described herein, and should be construed not to include some elements or some steps thereof, or should be construed to further include additional elements or steps.

In addition, in describing technologies disclosed herein, when it is determined that a detailed description of known technologies related thereto may unnecessarily obscure the subject matter disclosed herein, the detailed description will be omitted.

Furthermore, the accompanying drawings are provided only for a better understanding of the embodiments disclosed in this specification and are not intended to limit technical concepts disclosed in this specification, and therefore, it should be understood that the accompanying drawings include all modifications, equivalents and substitutes within the concept and technical scope of the present disclosure. In addition, not only respective embodiments described below, but also combinations of embodiments may of course be included within the concept and technical scope of the present disclosure as modifications, equivalents or substitutes.

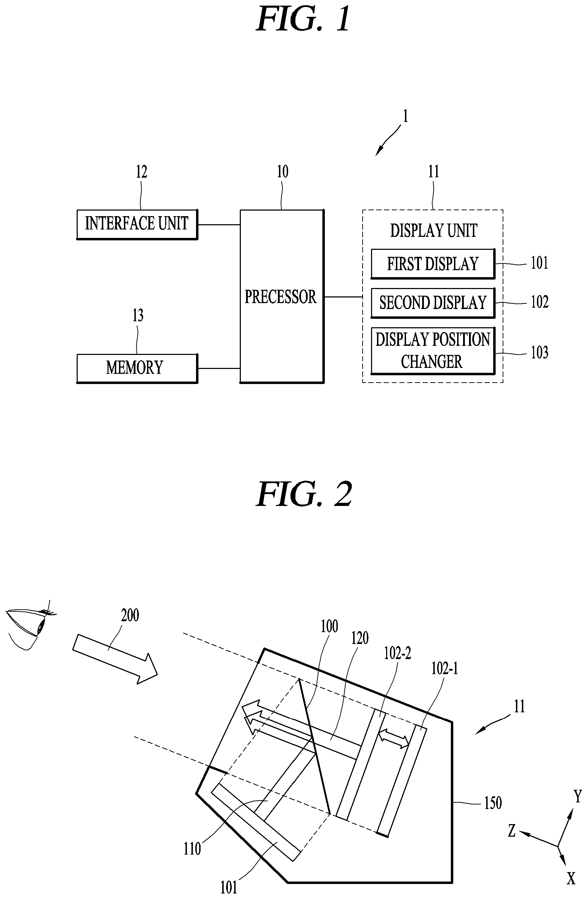

FIG. 1 is a block diagram showing a structure of a display device 1 according to an embodiment of the present disclosure.

Referring to FIG. 1, the display device 1 according to an embodiment of the present disclosure may include a processor 10, a display unit 11 connected to the processor 10 and controlled by the processor 10, an interface unit 12, and a memory 13. However, the components illustrated in FIG. 1 are not essentially required to implement the display device 1, and thus the display device 1 described herein may include more or fewer components than those listed above.

More specifically, the display unit 11 may include a plurality of displays in which at least one of a liquid crystal display (LCD), a thin film transistor-liquid crystal display (TFT LCD), an organic light-emitting diode (OLED), a flexible display, a three-dimensional (3D) display, and an e-ink display is disposed.

Here, the plurality of displays may be respectively disposed at front and rear surface sides of a light synthesizer with respect to the light synthesizer disposed on a display structure according to an embodiment of the present disclosure. Here, the light synthesizer may form an image through synthesizing a first image formed by reflecting incident light and a second image formed by reflecting incident light. In this case, the first image may be formed by reflection from either a front or rear surface side of the light synthesizer, and the second image may be formed by transmission from either the front or rear surface side of the light synthesizer.

In this case, the first image may be a virtual image that is an imaginary image formed by extending in a direction opposite to a direction in which light is reflected, and the second image may be a real image formed by actual light. Furthermore, the light synthesizer may form an image by synthesizing the reflected virtual image and the real image formed by the actual light passing through the light synthesizer.

As an example, the light synthesizer may be a semi-transmissive mirror. In this case, the plurality of displays may be respectively disposed at front and rear surface sides of the semi-transmissive mirror with respect to the semi-transmissive mirror. Hereinafter, a display that is disposed at a front surface side of the semi-transmissive mirror to emit first image light incident on the front surface of the semi-transmissive mirror is referred to as a first display 101, and a display that is disposed on a rear surface side of the semi-transmissive mirror to emit second image light incident on the rear surface of the semi-transmissive mirror is referred to as a second display 102. Furthermore, the display unit 11 may have at least one first display 101 and at least one second display 102.

In the following description, the use of a semi-transmissive mirror as the light synthesizer will be described as an example. However, the present disclosure is of course not limited thereto.

Meanwhile, at least one of the first display 101 and the second display 102 may be disposed to vary a position thereof. For example, at least one of the first display 101 and the second display 102 may be moved in a direction closer to the semi-transmissive mirror or in a direction away from the semi-transmissive mirror. Then, image information displayed on any one of the displays disposed to be movable may move away from or closer to image information displayed on another one of the displays. That is, since a distance from image information displayed on the other one of the displays to image information displayed on the either one of the displays is actually changed, a more realistic depth may be shown for image information displayed on the either one of the display.

Meanwhile, either one of the first display 101 and the second display 102 may be a display for displaying a background screen. Furthermore, the other one may be a display for displaying 3D image information to overlap the background screen. Accordingly, in order to distinguish between a display that displays the background screen and a display that displays the 3D image information, the display that displays the background image is referred to as a background display, and the display that displays the 3D image information is referred to as a foreground display. Therefore, either one of the first display 101 and the second display 102 may be a background display, and the other one may be a foreground display.

Alternatively, at least one of the first display 101 and the second display 102 may be moved left and right or up and down. As an example, assuming that one axis formed around the semi-transmissive mirror is an X-axis and a direction perpendicular to the X-axis is a Y-axis, at least one of the first display 101 and the second display 102 may be formed to move horizontally by a predetermined distance along the X-axis direction or may be formed to move vertically by a predetermined distance along the Y-axis direction. In this case, the image information displayed on at least one display disposed to be movable may be shown to move along the X-axis direction or the Y-axis direction according to the movement of the display.

Meanwhile, the display unit 11 may include a display position changer 103 for moving at least one display. As an example, the display position changer 103 may include a mechanism disposed to move at least one of the first display 101 and the second display 102 in a direction along preset one axis. For example, the display position changer 103 may be disposed by including a rail extending in the one direction, a mount disposed such that at least one display can be mounted, and at least one moving element (e.g., wheel) and a drive motor so as to move the mount in the one direction on the rail.

In addition, the display position changer 103 may be disposed to include a support portion that may support a moving display, so as to prevent shaking of the display even when the display mounted on the mount moves.

Furthermore, the interface unit 12 may serve as a path allowing the vehicle to interface with various types of external devices connected thereto. For example, the interface unit 12 may be provided with a port for connecting the vehicle and the display device 1, and the display device 1 and the control unit of the vehicle may be connected through the port. In this case, the interface unit 12 may receive various vehicle data provided from the vehicle control unit under the control of the processor 10.

Here, the vehicle data received through the interface unit 12 may be data related to image information to be displayed through the display unit 11. As an example, the data of the vehicle may be data related to an image around the vehicle acquired from a camera disposed in the vehicle and graphic objects displayed on the acquired image around the vehicle. For example, the graphic objects may include augmented reality objects, and the like.

In addition, the vehicle data received through the interface unit 12 may include infotainment functions and autonomous driving functions provided from the vehicle, and data related to driver convenience, such as helping to secure the driver's field of vision, such as night vision or blind spots. The functions related to driver convenience may include functions such as active cruise control (ACC), smart parking assist system (SPAS), night vision (NV), head up display (HUD), around view monitor (AVM), and lane departure warning system (LDWS).

In addition, the vehicle data received through the interface unit 12 may include data related to instrument panel information for conveying the vehicle's driving status and operation information of each device provided in the vehicle to the driver. In this case, based on the received vehicle data, the processor 10 may display the vehicle's instrument panel information through the display unit 11.

In this case, when providing information on driving of the vehicle and operation information of each device provided in the vehicle, the display unit 11 may include a frame (cluster) disposed inside the vehicle in a front surface portion of the driver seat or in a front surface portion of the driver seat and in a front surface portion of the passenger seat, and in this case, the display unit 11 may be named a digital cluster.

Meanwhile, the interface unit 12 may serve as a passage for supplying electric energy from the vehicle to the display device 1. Therefore, when the display device 1 is electrically connected to the vehicle through the interface unit 12, electric energy supplied from the power supply unit of the vehicle may be provided to the display device 1 through the interface unit 12 under the control of the vehicle control unit.

Furthermore, the memory 13 may store various data for the operation of the processor 10. As an example, the memory 13 may store an application or program and instructions for driving and controlling other components connected to the processor 10. As an example, the memory 13 may store an application or program and instructions for driving the display position changer 103 to move the position of the first display 101 or the second display 102.

Additionally, the memory 13 may store data for generating image information corresponding to data received through the interface unit 12. As an example, data for displaying at least one object corresponding to data received through the interface unit 12 on at least one display may be stored.

Additionally, the memory 13 may store information on 3D image information output conditions for outputting preset 3D image information.

Here, the preset 3D image information may be 3D image information in which a depth is expressed through the at least one display disposed to be movable. Furthermore, the 3D image information output conditions may be related conditions in cases where it is necessary to provide 3D image information with higher visibility to a driver or passenger riding in the passenger seat through a more realistic depth.

The output conditions of the 3D image information may be set in various ways.

As an example, while the vehicle is driving, a vehicle in front or on the left or right approaches by a preset distance, a collision warning for the approaching vehicle may be displayed as an augmented reality object. Furthermore, the augmented reality object may be 3D image information whose depth is adjusted through at least one display disposed to be movable.

The processor 10 may display an image around the vehicle sensed by the vehicle's camera as a background screen through a background display, and display 3D image information corresponding to the collision warning on the foreground display. Furthermore, a distance between the background display and the foreground display may be adjusted according to a distance between the surrounding vehicle and the own vehicle.

In this case, the closer a distance between the surrounding vehicle and the own vehicle, the farther a distance between the foreground display and the background display may be. Here, if the position of the background display is fixed, then the foreground display may be moved closer to the semi-transmissive mirror. Therefore, the image information displayed through the foreground display, that is, 3D image information, may be displayed to move closer to the driver or passenger. Accordingly, the visibility of image information displayed through the foreground display may be further improved.

Alternatively, a speed of the vehicle may be set as an output condition of the 3D image information. In this case, a distance between the foreground display, which displays 3D image information providing information on a speed of the vehicle, and the background display, which displays the background screen, may vary depending on the speed of the vehicle. Here, if the position of the background display is fixed, as the speed of the vehicle increases, the foreground display may move closer to the semi-transmissive mirror, and the 3D image information displayed through the foreground display may be displayed to move closer to the driver or passenger.

Meanwhile, whether to detect a distance to a destination, an obstacle on a road such as a preset road sign or a speed bump, and the like may be set as an output condition of the 3D image information. As an example, when a vehicle approaches within a predetermined distance from a destination, 3D image information related to the destination may be displayed. Similarly to the above, the foreground display may be spaced apart from the background display based on the remaining distance between the vehicle and the destination so as to display 3D image information that provides a realistic depth. Alternatively, when the obstacle is detected, the foreground display may be spaced from the background display according to a distance between the vehicle and the obstacle so as to display 3D image information that provides a realistic depth.

Furthermore, the processor 10 may control an overall operation of the display device 1 according to an embodiment of the present disclosure, and may control connected elements. For example, when a preset 3D image information output condition is satisfied, the processor 10 may control the display position changer 103 to change a separation distance between the background display displaying a background screen and the foreground display displaying 3D image information, between the first and second displays 101, 102, based on at least one of the detection values of the vehicle sensor detected through the interface unit 12.

Meanwhile, only one of the first and second displays 101, 102 may be movable. In this case, when the foreground display is disposed to be movable, the background display may be a display with a fixed position. Then, when a preset 3D image information output condition is satisfied, the processor 10 may move the foreground display closer to the semi-transmissive mirror to adjust a distance between the background display and the foreground display. In this case, 3D image information may be provided that provides a depth, such as the 3D image information to move closer to the driver or passenger.

Alternatively, when the background display is disposed to be movable, the foreground display may be a display with a fixed position. Then, when a preset 3D image information output condition is satisfied, the processor 10 may adjust a distance between the background display and the foreground display by moving the background display away from the semi-transmissive mirror. In this case, 3D image information may be provided that provides a depth such as when the background screen is moving away from the driver or passenger.

In addition, both of the first and second displays 101, 102 may be disposed to be movable. Then, when a preset 3D image information output condition is satisfied, the processor 10 may move the foreground display closer to the semi-transmissive mirror and move the background display away from the semi-transmissive mirror. Then, 3D image information may be provided that provides a depth, such as when the 3D image information is closer to the driver or passenger and the background screen is away from the driver or passenger.

In order to enable such a movement, the first and second displays 101, 102 may each be spaced apart by a predetermined distance from the semi-transmissive mirror.

Hereinafter, referring to FIG. 2, it is a cross-sectional diagram showing an X-axis cross-section of a display device according to a first embodiment of the present disclosure.

In this case, the first embodiment of the present disclosure may assume that the first display 101 between the first and second displays 101, 102 is a background display that displays a background screen, and the second display 102 is a foreground display that displays 3D image information. In addition, the embodiment may assume that the background display is disposed to fix a position, and the foreground display is disposed to change a position.

Referring to FIG. 2, the display unit 11 according to an embodiment of the present disclosure may include a semi-transmissive mirror 100, at least one first display 101 disposed on a front surface side of the semi-transmissive mirror 100, at least one second display 102 disposed on a rear surface side of the semi-transmissive mirror 100, and a housing 150 that accommodates the semi-transmissive mirror 100, the at least one first display 101, and the at least one second display 102.

Here, the housing 150 may be at least part of an internal frame of the vehicle constituting a front exterior of the driver seat of the vehicle. In addition, the housing 150 may be disposed such that one side thereof is open in consideration of a normal eye height of a driver seated in the driver seat so as to allow the driver to identify the semi-transmissive mirror 100 accommodated thereinside. In this case, an opening surface of the housing 150 may be disposed to face an eye position of a virtual driver seated in a driver seat according to a preset eye height assuming a driver seated in the driver seat. Hereinafter, a virtual straight line connecting the center of the opening surface from the virtual driver's eye position is referred to as the driver's gaze, and a direction corresponding to the virtual straight line is referred to as a gaze direction 200. Here, the gaze direction 200 may also be referred to as an opening direction in which an opening surface of the housing 150 is disposed.

First, the semi-transmissive mirror 100 may be a mirror disposed to reflect light incident on a front surface of the semi-transmissive mirror 100 and transmit light incident on a rear surface of the semi-transmissive mirror 100. To this end, the semi-transmissive mirror 100 may be provided with a flat reflective layer deposited with titanium or the like, and may have a size corresponding to the projection surfaces of displays that emit image light incident on the rear and front surfaces.

In addition, the semi-transmissive mirror 100 may be a semi-transmissive mirror whose light transmittance is adjusted so as to allow a brightness of an image (virtual image) reflected by the semi-transmissive mirror 100 and a brightness of an image (real image) transmitted by the semi-transmissive mirror 100 to be the same. Accordingly, the brightness of the virtual image and the brightness of the real image may become the same.

When the second display 102 is disposed at a rear surface side of the semi-transmissive mirror 100, an image displayed on the second display 102, that is, image light 120 emitted from the second display 102, may be incident at the rear surface side of the semi-transmissive mirror 100. Then, the image light 120 of the second display 102 may pass through the semi-transmissive mirror 100. On the contrary, when the first display 101 is disposed at a front surface side of the semi-transmissive mirror 100, an image displayed on the first display 101, that is, image light 110 emitted from the first display 101, may be incident at the front surface side of the semi-transmissive mirror 100. Then, the image light 110 of the first display 101 may be reflected from a front surface of the semi-transmissive mirror 100.

In this case, a reflection image reflected from the front surface of the semi-transmissive mirror 100 may generate a virtual image corresponding to the image displayed on the first display 101. The virtual image may be formed at a distance spaced apart in a rear direction of the semi-transmissive mirror 100 by a distance that is proportional to a distance at which the first display 101 is spaced apart from the front surface of the semi-transmissive mirror 100. Therefore, an image (virtual image) corresponding to the first display 101 may be formed on a rear surface side of the semi-transmissive mirror 100.

On the contrary, a transmission image passing through the semi-transmissive mirror 100 may generate a real image corresponding to an image displayed on the second display 102. In this case, the real image, which is an image actually formed on the semi-transmissive mirror 100 with respect to the second display 102, may be actually formed at the same position as that of the second display 102. Accordingly, the real image may be formed on a rear surface side of the semi-transmissive mirror 100 on which the second display 102 is disposed.

Therefore, through the semi-transmissive mirror 100, both a virtual image corresponding to the image of the first display 101 and a real image corresponding to the image of the second display 102 may be formed at the rear surface side of the semi-transmissive mirror 100.

Meanwhile, in order to prevent the first display 101 that irradiates the image light 110 to the front surface of the semi-transmissive mirror 100 from blocking the semi-transmissive mirror 100 from the driver's gaze, the first display 101 may be disposed at a lower or upper side with respect to the gaze direction 200. In this case, the semi-transmissive mirror 100 may be disposed to be inclined at a predetermined angle in a direction in which the first display 101 is disposed with respect to the gaze direction 200 in order to reflect the image light 110 emitted from the first display 101.

Therefore, as shown in FIG. 2, the first display 101 may be disposed at a lower side with respect to the gaze direction 200, that is, at a lower front side of the semi-transmissive mirror 100. In this case, the first display 101 may be disposed at a bottom of the housing 150, that is, at a bottom of a vehicle internal frame (hereinafter referred to as a cluster) constituting a front surface portion of the driver seat. Then, the semi-transmissive mirror 100 may be disposed to be inclined so as to allow a front surface thereof to be tilted at a lower side in a direction in which the first display 101 is disposed, that is, the gaze direction 200. In addition, the semi-transmissive mirror 100 may be disposed to be inclined at an angle so as to allow a virtual image formed by the semi-transmissive mirror 100 to be formed in a direction facing the gaze direction 200.

However, when boarding the vehicle, prior to being seated in the driver seat, the driver's eye position may be higher than that shown in FIG. 2. Accordingly, since the driver's gaze direction forms a higher angle, as shown in FIG. 2, a problem may arise in which the first display 101 disposed at a lower front side of the semi-transmissive mirror 100 is exposed to the driver's gaze direction.

In order to avoid such a problem, the first display 101 may be disposed to be inclined at a predetermined angle with respect to the driver's normal gaze direction 200. As an example, as shown in FIG. 2, when the first display 101 is disposed not perpendicular to the gaze direction 200 but tilted at a predetermined angle (e.g., 44 degrees) with respect to the gaze direction 200, even when the driver views the display structure according to an embodiment of the present disclosure from a higher position than the eye position corresponding to the normal gaze direction 200, the first display 101 may not be exposed to the driver's gaze due to the inclined disposition of the first display 101.

Meanwhile, unlike the first display 101, the second display 102 may be disposed in a direction facing the gaze direction 200. Accordingly, a real image formed through the semi-transmissive mirror 100 may also be formed in a direction facing the gaze direction 200 from a rear side of the semi-transmissive mirror 100. However, since the virtual image is also formed to face the gaze direction 200 from the rear side of the semi-transmissive mirror 100 due to the inclination angle of the semi-transmissive mirror 100, both the real image and the virtual image may be formed to face the gaze direction 200 from the rear side of the semi-transmissive mirror 100.

Meanwhile, as described above, the 3D image information may overlap the background screen such that the real image (3D image information) formed from the second display 102 (foreground display) may overlap the virtual image (background screen) formed from the first display 101 (background display). Accordingly, the first display 101 may be disposed to be spaced apart from the semi-transmissive mirror 100 so as to allow the virtual image to be formed at a distance that matches a distance on the Z-axis (gaze direction 200) at which the real image is formed from the semi-transmissive mirror 100.

Furthermore, the second display 102 (foreground display) may be moved from a first position 102-1 to a second position 102-2 as shown in FIG. 2. That is, it may be moved in a direction closer to the semi-transmissive mirror 100 along the gaze direction 200. In this case, the real image (3D image information) formed from the second display 102 may be formed at a rear surface side of the semi-transmissive mirror 100 with the virtual image (background screen) formed from the first display 101 (background display). Furthermore, as the second display 102 moves toward the semi-transmissive mirror 100, the 3D image information displayed on the second display 102 may further reflect not only a movement on the second display 102, that is, a movement on a plane, but also a movement of the second display 102 toward the semi-transmissive mirror 100. Therefore, 3D image information having a stereoscopic movement moving in a direction closer to the driver or passenger may be provided from a virtual image (background screen) formed from the first display 101.

In addition, the second display 102 (foreground display) may be moved from a first position 102-2 to a second position 102-2 as Additionally in FIG. 2. That is, it may be moved in a direction further away from the semi-transmissive mirror 100. Then, 3D image information having a stereoscopic movement may be provided by moving further away from a position closer to the driver or passenger to a virtual image (background screen) formed from the first display 101.

Meanwhile, in the foregoing description, in order to prevent the first display 101 from blocking the semi-transmissive mirror 100, it has been described an example on the assumption that the first display 101 is disposed at a lower side with respect to the gaze direction 200. However, on the contrary, the first display 101 may be disposed in a different manner. As an example, the first display 101 may be disposed at an upper side of the gaze direction 200, that is, at a top of a cluster.

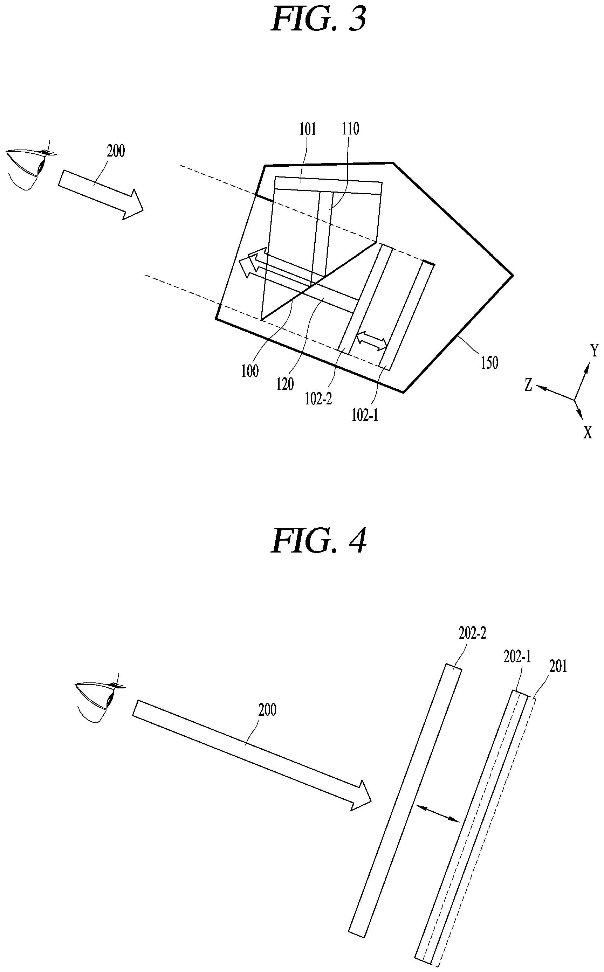

FIG. 3 is an exemplary diagram showing another example of the first embodiment of the present disclosure, in which a first display 101 is disposed at an upper side of a cluster in another display device 1 according to the first embodiment of the present disclosure.

As described above, the first display 101 may form a virtual image corresponding to a background screen. Furthermore, the virtual image may be formed by being reflected from a front surface of the semi-transmissive mirror 100. Therefore, when the first display 101 is disposed at a top of the cluster, that is, at an upper side of the gaze direction 200, as shown in FIG. 3, the semi-transmissive mirror 100 may also be disposed to be inclined at a predetermined angle in a direction in which the first display 101 is disposed.

Thus, as shown in FIG. 3, when the first display 101 is disposed at an upper side with respect to the gaze direction 200, the semi-transmissive mirror 100 may be disposed to be inclined so as to allow a front surface thereof to be tilted in a direction in which the first display 101 is disposed. Accordingly, as shown in FIG. 3, when the first display 101 is disposed at an upper side of the gaze direction 200, the semi-transmissive mirror 100 may be disposed to be inclined in a direction opposite to an inclination angle as shown in FIG. 2.

In such a case, the first display 101 may not be accommodated at a bottom of a cluster area. Therefore, as shown in FIG. 3, a volume at the bottom of the cluster may be further reduced. Therefore, the display device 1 according to an embodiment of the present disclosure may of course be applied even to a vehicle in which there is no sufficient space to accommodate the first display 101 at the bottom of the cluster due to a steering wheel, an operating part, and the like.

Meanwhile, FIG. 4 is an exemplary diagram showing an example of virtual and real images formed from the first and second displays in the display device 1 according to the first embodiment of the present disclosure as shown in FIGS. 2 and 3.

Referring to FIG. 4, as described above, a virtual image 201 implemented from the first display 101 and a real image formed at different positions (a first real image position and a second real image position 202-1, 202-2) implemented from the second display 102 may be formed behind the semi-transmissive mirror 100 in a direction facing the gaze direction 200. Here, the first real position 202-1 may be a position that overlaps at least partly with the virtual image 201 depending on the position (first position 102-1) of the second display 102, and the second real position 202-2 may be a position close to the semi-transmissive mirror 100 depending on the moved position (second position 102-2) of the second display 102.

Meanwhile, as described above, the second display 102 may move from the first position 102-1 to the second position 102-2 according to a driving of the display position changer 103. Accordingly, a real image formed from the second display 102 may be moved from a first real image position 202-1 that overlaps at least partly with a virtual image 201 to a second real image position 202-2 that is close to the semi-transmissive mirror 100 along one axis (Z-axis) direction corresponding to the gaze direction 200. Therefore, the real image including the image information displayed on the second display 102 may move from the first real image position 202-1 to the second real image position 202-1 according to the movement of the second display 102. Therefore, the image information displayed on the second display 102 may move not only along a movement on a plane of the second display 102 but also along the gaze direction 200, that is, the depth direction, and accordingly, not only the movement on the plane but also a stereoscopic movement according to the movement in the depth direction may be reflected.

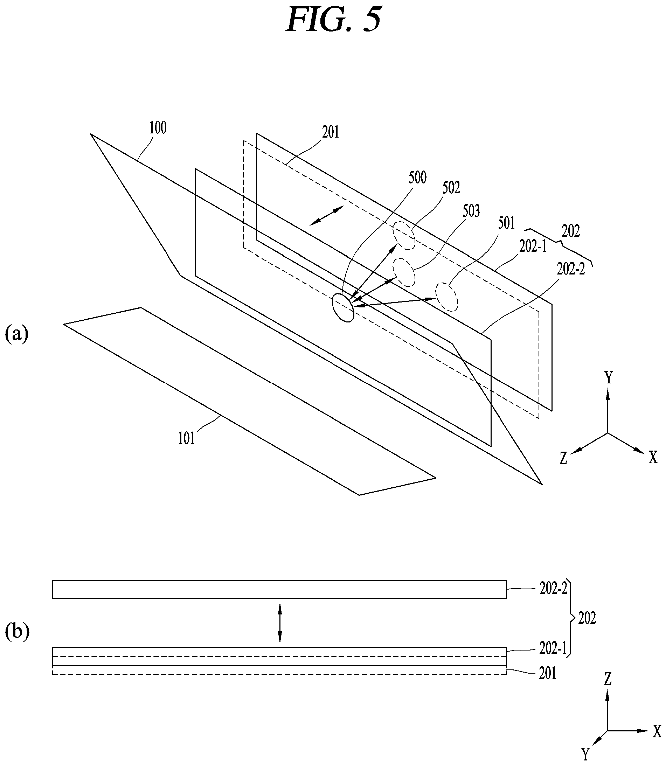

Meanwhile, FIG. 5 is a perspective diagram of the display unit 11 of the display device 1 according to the first embodiment of the present disclosure, in which the second display 102 is disposed to be movable as a foreground display as described above, and a Y-axis cross-sectional diagram of virtual and real images that are displayed to overlap in the Z-axis direction.

Referring to (a) of FIG. 5, the display unit 11 according to the first embodiment of the present disclosure has one first display 101 disposed on a front surface side of the semi-transmissive mirror 100, and one second display 102 disposed on a rear surface side of the semi-transmissive mirror 100, such that the first display 101 and the second display 102 may be disposed in front of and behind the semi-transmissive mirror 100 with the semi-transmissive mirror 100 at the center. In this case, the position on the X-axis (one axis formed with respect the semi-transmissive mirror 100) where the first display 101 is disposed and the position on the X-axis where the second display 102 is disposed may overlap each other.

Furthermore, as shown in (a) of FIG. 5, a virtual image 201 may be formed behind the semi-transmissive mirror 100 by the image light of the first display 101 reflected from a front surface of the semi-transmissive mirror 100. Additionally, a real image 202 may be formed behind the semi-transmissive mirror 100 by the image light of the second display 102 transmitted through a rear surface of the semi-transmissive mirror 100. The real image 202 and virtual image 201 may be formed in a direction facing each other with respect to the gaze direction 200. Accordingly, the virtual image 201 formed by the first display 101 and the real image 202 formed by the second display 102 may overlap at one point behind the semi-transmissive mirror 100.

In this case, the first display 101 serves as a background display, and the virtual image 201 formed from the first display 101 may form a background screen that serves as the background of 3D image information. Additionally, the first display 101 may be a display with a fixed position.

Here, the virtual image formed from the first display 101 may be reverted left and right due to the reflection. Accordingly, the first display 101 may display an image whose left and right sides are reverted in advance in consideration of the left and right reversal due to the reflection.

Meanwhile, the second display 102 may be a foreground display that displays 3D image information to overlap the background screen. Additionally, the second display 102 may be a display disposed to be movable along one axis (Z-axis) according to the gaze direction 200.

Accordingly, as shown in (b) of FIG. 5, a real image 202 may be formed at a first real image position 202-1 that overlaps at least partly with the virtual image 201 according to the Z-axis movement of the second display 102 (when the second display 102 is at the first position 102-1). In addition, a real image 202 may be formed at a second real image position 202-2 close to the semi-transmissive mirror 100 according to the Z-axis movement of the second display 102 (when the second display 102 is at the second position 102-2).

That is, when the second display 102 moves from the first position 102-1 to the second position 102-2, the real image 202 may move from the first real image position 202-1 to the second real image position 202-2 as shown in (b) of FIG. 5. Conversely, when the second display 102 moves from the second position 102-2 to the first position 102-1, the real image 202 may move from the second image position 202-2 to the first image position 202-1.

By the movement of the real image 202, the image information included in the real image 202 may reflect a movement in a direction of one axis (Z-axis) according to the gaze direction 200.

As an example, image information displayed through the real image 202 may be image information moving from the first position 501 or the second position 502 to the center of the real image 202 along the X-axis direction or the Y-axis direction. In this case, the image information may be moved in the Z-axis direction along the moving second display 102 as well as in the X-axis or Y-axis direction. Accordingly, as shown in (a) of FIG. 5, when the image information moves in the X-axis direction or the Y-axis direction while the second display 102 is moving, the image information may be displayed to move in a direction in which the X-axis and Z-axis directions are synthesized, or in a direction in which the Y-axis and Z-axis directions are synthesized. Accordingly, while at the same time moving in the X-axis or Y-axis direction, image information having a stereoscopic movement that approaches the driver or passenger may be displayed.

In addition, when the second display 102 moves while image information is displayed at a third position 503 at the center of the real image, the image information may move in the Z-axis direction along the moving second display 102 even when there is no movement of the image information. Accordingly, the image information may be displayed to move from the center 503 of the first real image position 202-1 to the center 500 of the second real image position 202-2. That is, it may be displayed as image information approaching the driver or passenger.

Meanwhile, in the first embodiment of the present disclosure as described above, it has been described on the assumption that the first display 101 disposed in front of the semi-transmissive mirror 100, and disposed at a lower side with respect to the gaze direction 200 or the opening direction of the housing 150 is a background display that displays a background screen, and the second display 102 disposed in front of the semi-transmissive mirror 100 and disposed so as to face the opening direction of the housing 150 is a foreground display that displays 3D image information to overlap the background screen.

However, on the contrary, the first display 101 may of course be a foreground display and the second display 102 may of course be a background display. Furthermore, in this case, when the first display 101 is a foreground display, the first display 101 may be disposed to be movable such that the virtual image formed from the first display 101 may move in a direction of the gaze direction 200, that is, the Z-axis direction. Hereinafter, a display device 1 having a structure in which the first display 101 is a foreground display, the second display 102 is a background display, and the first display 101 is disposed to be movable is referred to as a display device according to a second embodiment of the present disclosure.

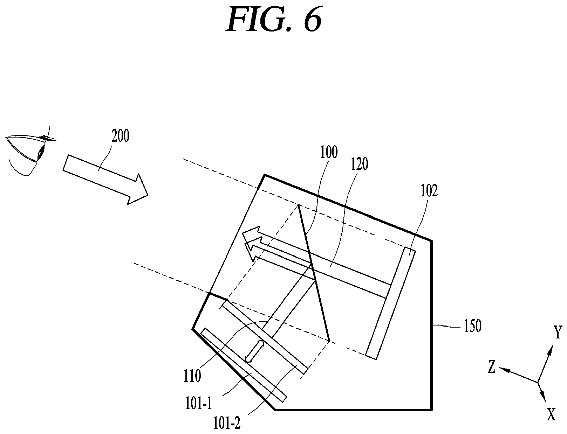

FIG. 6 is a cross-sectional diagram showing the X-axis cross-section of a display device 1 according to the second embodiment of the present disclosure.

Referring to FIG. 6, the display structure 11 according to an embodiment of the present disclosure, in a similar manner to the first embodiment, may include a semi-transmissive mirror 100, at least one first display 101 disposed on a front surface side of the semi-transmissive mirror 100, at least one second display 102 disposed on a rear surface side of the semi-transmissive mirror 100, and a housing 150 that accommodates the semi-transmissive mirror 100, the at least one first display 101, and the at least one second display 102.

In addition, the semi-transmissive mirror 100 may be a mirror disposed to reflect incident light on a front surface of the semi-transmissive mirror 100, and transmit incident light through a rear surface of the semi-transmissive mirror 100. Furthermore, it may have a size corresponding to projection surfaces of the displays that emit image lights incident on the rear and front surfaces. In addition, the semi-transmissive mirror 100 may be a semi-transmissive mirror whose light transmittance is adjusted so as to allow a brightness of an image (virtual image) reflected by the semi-transmissive mirror 100 and a brightness of an image (real image) transmitted by the semi-transmissive mirror 100 to be the same.

Therefore, image light 120 emitted from the second display 102 disposed on a rear surface side of the semi-transmissive mirror 100 is incident on a rear side of the semi-transmissive mirror 100, so as to generate a real image behind the semi-transmissive mirror 100. On the contrary, when disposed on a front surface side of the semi-transmissive mirror 100, image light 110 emitted from the first display 101 may be incident on a front surface of the semi-transmissive mirror 100 to generate a virtual image behind the semi-transmissive mirror 100.

Meanwhile, as described above, when the first display unit 11 is a foreground display and the second display 102 is a background display, the second display 102 that displays a background screen through a real image may be a display with a fixed position. On the contrary, the first display 101 that displays 3D image information may be a display disposed to be movable according to a driving of the display position changer 103.

Here, the virtual image may be formed at a distance spaced apart in a rear direction of the semi-transmissive mirror 100 by a distance that is proportional to a distance at which the first display 101 is spaced apart from the front surface of the semi-transmissive mirror 100. Accordingly, as shown in FIG. 6, when the first display 101 moves closer to or away from the semi-transmissive mirror 100, a virtual image formed from the first display 101 may also move closer to or away from the semi-transmissive mirror 100.

Meanwhile, the first display 101 may be formed to move from a first position 101-1, which is a position furthest from the semi-transmissive mirror 100, to a second position 101-2, which is a position closest to the semi-transmissive mirror 100. In this case, the first position 101-1 may be a position where a virtual image (3D image information) formed from the first display 101 is formed at a position that overlaps at least partially with a real image (background screen) formed from the second display 102.

That is, a distance between the first position 101-1 and the semi-transmissive mirror 100 may be a distance corresponding to a separation distance between a real image formed by the second display 102 and the semi-transmissive mirror 100. Therefore, a distance between the second position 101-2 and the semi-transmissive mirror 100 may be a shorter distance than a separation distance between a real image formed by the second display 102 positioned at the first position 101-1 and the semi-transmissive mirror 100.

Therefore, when the first display 101 moves from the first position 101-1 to the second position 101-2 or from the second position 101-2 to the first position 101-1, 3D image information on the first display 101 displayed through a virtual image may be displayed to move from a background screen toward a driver or passenger, or move from the driver or passenger toward the background screen.

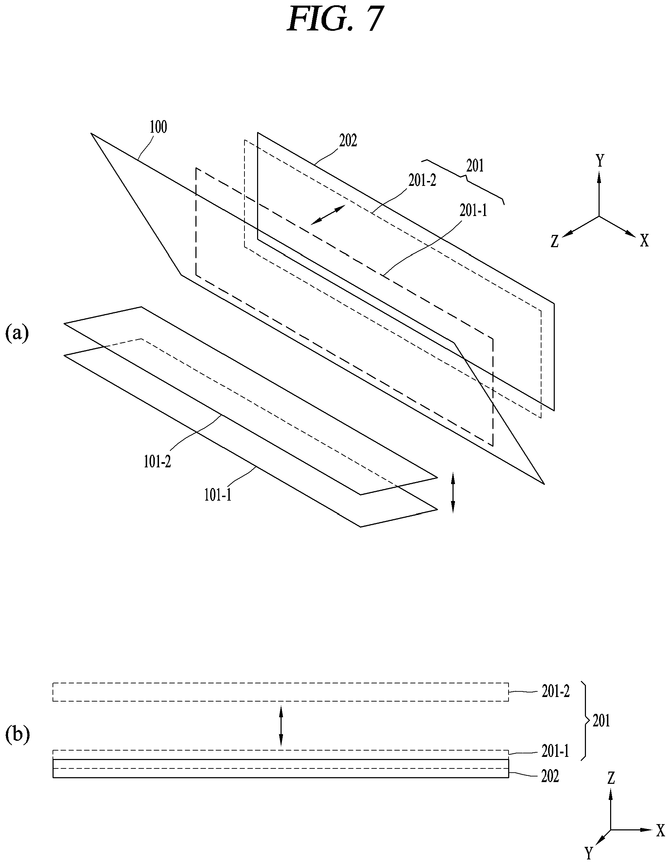

Meanwhile, FIG. 7 is a perspective diagram of the display unit 11 of the display device 1 according to the second embodiment of the present disclosure, in which the first display 101 is disposed to be movable as a foreground display, and a Y-axis cross-sectional diagram of virtual and real images that are displayed to overlap in the Z-axis direction.

Referring to (a) of FIG. 7, for the display unit 11 according to a second embodiment of the present disclosure, a first display 101 disposed to be movable may be disposed at a front surface side of the semi-transmissive mirror 100, and a second display 102 whose position is fixed is disposed at a rear side of the semi-transmissive mirror 100, in such a manner that the first display 101 and the second display 102 may be disposed to cross in front of and behind the semi-transmissive mirror 100 with the semi-transmissive mirror 100 at the center.

Then, as shown in (a) of FIG. 7, a virtual image 201 may be formed behind the semi-transmissive mirror 100 by the image light of the first display 101 reflected from a front surface of the semi-transmissive mirror 100. Additionally, a real image 202 may be formed behind the semi-transmissive mirror 100 by the image light of the second display 102 transmitted through a rear surface of the semi-transmissive mirror 100. The virtual image 201 and the real image 202 may be formed in a direction facing each other with respect to the gaze direction 200.

In this case, the second display 102 serves as a background display, and the real image 202 formed from the second display 102 may form a background screen that serves as a background of 3D image information. Additionally, the second display 102 may be a display with a fixed position.

Meanwhile, the first display 101 may be a foreground display that displays 3D image information to overlap the background screen. Additionally, the first display 101 may be a display disposed to move in a direction closer to the semi-transmissive mirror 100 or in a direction away from the semi-transmissive mirror 100.

Here, the virtual image formed from the first display 101 may be reverted left and right due to the reflection. Accordingly, the first display 101 may display an image whose left and right sides are reverted in advance in consideration of the left and right reversal due to the reflection.

In this case, as shown in (b) of FIG. 7, a virtual image 201 may be formed at a first virtual image position 201-1 that overlaps at least partly with the real image 202 according to the movement of the first display 101 (when the first display 101 is at the first position 101-1). In addition, a virtual image 201 may be formed at a second virtual image position 201-2 close to the semi-transmissive mirror 100 according to the movement of the first display 101 (when the first display 101 is at the second position 101-2).

That is, when the first display 101 moves from the first position 101-1 to the second position 101-2, the virtual image 201 may move from the first virtual image position 201-1 to the second virtual image position 201-2 along one axis (Z-axis) according to the gaze direction 200 as shown in (b) of FIG. 7. Conversely, when the first display 101 moves from the second position 101-2 to the first position 101-1, the real image 202 may move along one axis (Z-axis) according to the gaze direction 200 from the second virtual image position 201-2 to the first virtual image position 201-1.

Furthermore, by the movement of the virtual image 201, the image information included in the virtual image 201 may be moved in a direction of the gaze direction 200 (Z-axis). Accordingly, the image information included in the virtual image 201 may be image information that moves not only in a movement direction on a plane of the first display 101 but also according to a movement in the depth direction (Z-axis) of the virtual image 201. Therefore, image information that moves in a depth direction as well as a movement on a plane corresponding to the virtual image 201 may be displayed.

Meanwhile, in the first and second embodiments of the present disclosure as described above, it has been described as an example that the real image 202 and the virtual image 201 of the same size are displayed because the sizes of the first and second displays 101, 102 are the same, but a size of one of the first and second displays 101, 102 may of course be different from a size of the other. In such a case, the virtual image or real image formed by either one of the displays may be smaller than the real image or virtual image formed by the other one display. In this case, a real or virtual image formed by the other one of the displays may overlap with a portion of the real or virtual image formed by the either one of the displays.

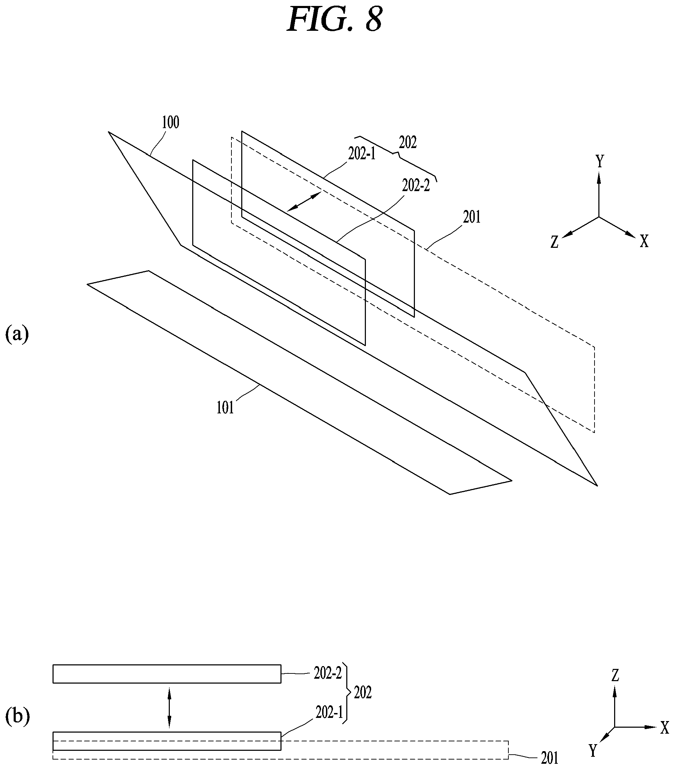

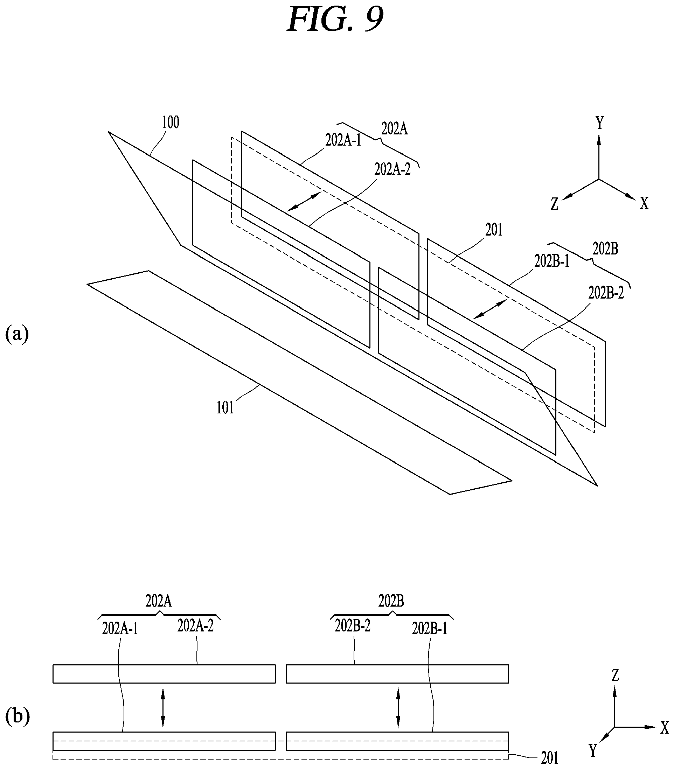

FIGS. 8 and 9 show examples of such cases.

First, referring to FIG. 8, FIG. 8 shows an example in which a display unit 11 is configured such that a real image 202 including 3D image information overlaps with a portion of a virtual image 201 including a background screen. In this case, the first display 101 may be a background display that displays the background screen, and may be a display with a fixed position. On the contrary, the second display 102 may be a foreground display that displays the 3D image information, and may be a display disposed to be movable.

In this case, as shown in (a) of FIG. 8, the second display 102 may be a display smaller than the first display 101. As an example, the first display 101 may be a display that extends in the X-axis direction (one axis direction along the semi-transmissive mirror 100) so as to display a virtual image 201 over an entire front surface portion of the driver seat and the passenger seat of the vehicle, while the second display 102 may be a display having a length in the X-axis direction corresponding to either one of the front surface of the driver seat or the front surface of the passenger seat.

Meanwhile, the second display 102, which is a foreground display that displays the 3D image information, may be a display disposed to be movable in the gaze direction 200, that is, in the Z-axis direction. Accordingly, as shown in (b) of FIG. 8, the real image 202 may be moved from the first real image position 202-1 to the second real image position 202-2 or may be moved from the second real image position 202-2 to the first real image position 202-1 according to the movement of the second display 102. Furthermore, by the movement of the real image 202, the movement in the Z-axis direction may be reflected to the image information included in the real image 202.

In this case, as shown above in FIG. 8, the second display 102 may be a display disposed only on either one of the front surface portion of the driver seat or the front surface portion of the passenger seat. In this case, the real image 202 formed from the second display 102 may overlap only with a portion of the virtual image 201, that is, a portion corresponding to the front surface portion of the driver seat or the front surface portion of the passenger seat. Accordingly, the 3D image information displayed according to the movement of the second display 102 may be displayed only on a portion corresponding to the front surface portion of the driver seat or the front surface portion of the passenger seat.

Meanwhile, as shown above in FIG. 8, it has been described as an example in which a real image formed by a second display overlaps with a portion of a virtual image formed by a first display, and accordingly 3D image information with a depth reflected by the second display is displayed, but the present disclosure is of course not limited thereto. That is, on the contrary to the foregoing description, a virtual image formed by the first display may overlap with a portion of a real image formed by the second display, and thus 3D image information with a depth reflected by the first display may of course be displayed.

Meanwhile, the display position changer 103 may be configured such that the foreground display can be further moved in a direction of one axis (X-axis) disposed with respect to the semi-transmissive mirror 100. As an example, when the foreground display is a second display, the display position changer 103 may be disposed so as to allow the second display 102 to move not only in the Z-axis direction (gaze direction 200) but also in the X-axis direction. In addition, when the foreground display is the first display, the display position changer 103 may be disposed to move the first display 101 in a direction closer to or away from the semi-transmissive mirror 100 from a lower front side of the semi-transmissive mirror 100, as well as to move in the X-axis direction.

In this case, as shown above in FIG. 8, if the first display 101, which is a background display, is a display that extends in the X-axis direction to display a virtual image 201 over an entire front surface portion of the driver seat and the passenger seat of the vehicle, and the second display 102, which is a foreground display, is a display that has a length in the X-axis direction corresponding to either one of a front surface of the driver seat or a front surface of the passenger seat, then the processor 10 may control the second display 102 to move along the X-axis direction.

In this case, when the second display 102 is disposed in a front surface portion of the driver seat, the 3D image information may be displayed only in an area of the virtual image 201 corresponding to the front surface portion of the driver seat. On the contrary, if the second display 102 is disposed in the front surface portion of the passenger seat, the 3D image information may be displayed only in an area of the virtual image 201 corresponding to the front surface portion of the passenger seat. Furthermore, as needed, the processor 10 may display the 3D image information on either one of the front surface portion of the driver seat and the front surface portion of the passenger seat by changing the X-axis position of the second display 102.

On the other hand, unlike as shown in FIG. 8, there may of course be provided with a plurality of foreground displays that display 3D image information. In this case, when the foreground display is the first display 101, the display unit 11 may include a plurality of first displays 101. On the contrary, when the foreground display is a second display 102, the display unit 11 may include a plurality of second displays 102. FIG. 9 shows an example of a case where a plurality of second displays 102 form a foreground display that is driven separately from each other.

First, referring to (a) of FIG. 9, the first display 101, which is a background display, may be a display extended in the X-axis direction so as to display a virtual image 201 over an entire front surface portion of the driver seat and the passenger seat of the vehicle. In this case, a virtual image 201 extended in the X-axis direction along the first display 101 may be formed behind the semi-transmissive mirror 100, and accordingly, the background screen displayed on the first display 101 may be displayed as the virtual image 201.

Meanwhile, the display unit 11 of the display device 1 according to an embodiment of the present disclosure may include a plurality of second displays 102 that each generate real images 202A, 202B that overlap with a different portion of the virtual image 201. In this case, the processor 10 may control each of the plurality of second displays 102 and control the display position changer 103 to allow the second displays 102 to move along the Z-axis separately from each other. In this case, the display position changer 103 may include independent modules disposed so as to move each of the plurality of second displays 102.

Meanwhile, each second display 102, which is a foreground display that displays 3D image information, may be a display disposed to be movable in the Z-axis direction. Accordingly, as shown in (b) of FIG. 9, depending on the movement of each second display 102, the first real image 202A may be moved between the first-1 real image position 202A-1 and the first-2 real image position 202A-2, or the second real image 202B may be moved between the second-1 real image position (202B-1) and the second-2 real image position (202B-2). Furthermore, in the image information included in each of the real images 202A, 202B, different movements in the Z-axis direction according to the movement of the real images 202A, 202B may be reflected.

In this case, the either one second display may be disposed in a front surface portion of the driver seat, and the other one second display may be disposed in a front surface portion of the passenger seat. In this case, since the movement of the either one second display and the other one second display along the Z axis is controlled separately by the processor 10, the 3D image information displayed on the front surface portion of the driver seat and the 3D image information displayed on the front surface portion of the passenger seat may be shown at different depths.

Meanwhile, according to the foregoing description, the display position changer 103 may be configured such that the foreground display can be further moved in a direction of one axis (X-axis) disposed with respect to the semi-transmissive mirror 100.

In this case, assuming that the second display (hereinafter referred to as the second-1 display) constituting the first real image 202A is disposed in a front surface portion of the driver seat and the second display (hereinafter referred to as the second-2 display) constituting the second real image 202B is disposed in a front surface portion of the passenger seat, the display position changer 103 may move the second-1 display along the X-axis toward the front surface portion of the passenger seat or move the second-2 display along the X-axis toward the front surface side of the driver seat under the control of the processor 10. In such a case, a plurality of second displays (second-1 and second-2 displays) may be disposed on either one of the front surface portion of the driver seat and the front surface portion of the passenger seat, and no second display may be disposed on the other one.

Meanwhile, 3D image information displayed on each of the plurality of second displays may overlap either one of the plurality of second displays disposed in the front surface portion of the driver seat and the front surface portion of the passenger seat. In this case, a multi-stereoscopic effect may be applied to 3D image information according to a Z-axis directional movement of the plurality of second displays.

As an example, the plurality of second displays may overlap each other. Then, the Z-axis distance that each second display can move may be limited due to the overlapping second displays. On the contrary, since each of secondary displays is driven separately from each other, each may display 3D objects that move differently.

In such a case, the second-2 display overlapping the bottom of the plurality of second displays may display a specific object moving from a first point positioned in the X-axis direction to a second point. Furthermore, the second-1 display overlapping the top of the plurality of second displays may display the specific object at the same position as the second point when the specific object on the second-2 display has completed moving to the second point. Furthermore, the processor 10 may sequentially move the plurality of second displays, respectively, in a direction closer to the semi-transmissive mirror 100 along the Z-axis.

Then, according to the X-axis directional movement of the specific object on the second-2 display, the specific object may be primarily displayed to move in the X-axis direction and the Z-axis direction, which is a depth direction (reflecting the Z-axis directional movement of the second-2 display). Furthermore, when the specific object completes moving to the second point, the specific object may be displayed to move in a direction closer to the driver or passenger by the Z-axis directional movement of the second-1 display. That is, through the overlapping of the second displays, a multi-stereoscopic effect may be formed that makes the specific object to be shown to move in the Z-axis direction following the movement along a synthesized direction of the X-axis and Z-axis.

Meanwhile, the foregoing description has described an example in which a background screen is displayed as a virtual or real image generated through a single display, but a plurality of displays may be connected to form an integrated display area, and the background screen may be displayed in the formed integrated display area. In this case, the integrated display area may be a screen consisting of at least one real image and at least one virtual image such that image information displayed on the plurality of displays can be connected without a non-display area (e.g., a bezel area) caused by physical overlapping of the displays.

To this end, the display device 1 according to an embodiment of the present disclosure may be provided with a plurality of displays that are disposed to cross in front of and behind the semi-transmissive mirror 100 along one axis (X-axis) formed with respect to the semi-transmissive mirror 100. Furthermore, image light emitted from at least one display (first display 101) disposed in front of the semi-transmissive mirror 100 may be reflected by the semi-transmissive mirror 100 to generate at least one virtual image forming a portion of the integrated display area. Additionally, image light emitted from at least one display (second display 102) disposed behind the semi-transmissive mirror 100 may be transmitted through the semi-transmissive mirror 100 to generate at least one real image forming another portion of the integrated display area.

Furthermore, in at least part of the integrated display area where a virtual image is formed, a foreground display may be further disposed to generate a real image overlapping the virtual image. In this case, the foreground display is disposed behind the semi-transmissive mirror 100 and may be disposed to be movable in a direction closer to or away from the semi-transmissive mirror 100. Furthermore, as the foreground display moves, the real image information displayed on the foreground display may be displayed as 3D image information formed to move from a position where a virtual image displaying the background screen is formed toward the driver or passenger (Z-axis direction).

Alternately, in at least part of the integrated display area where a real image is formed, a foreground display may be further disposed to generate a virtual image overlapping the real image. In this case, the foreground display is disposed in front of the semi-transmissive mirror 100 and may be disposed to be movable in a direction closer to or away from the semi-transmissive mirror 100. Furthermore, as the foreground display moves, the virtual image information displayed on the foreground display may be displayed as 3D image information formed to move from a position where a real image displaying the background screen is formed toward the driver or passenger (Z-axis direction).

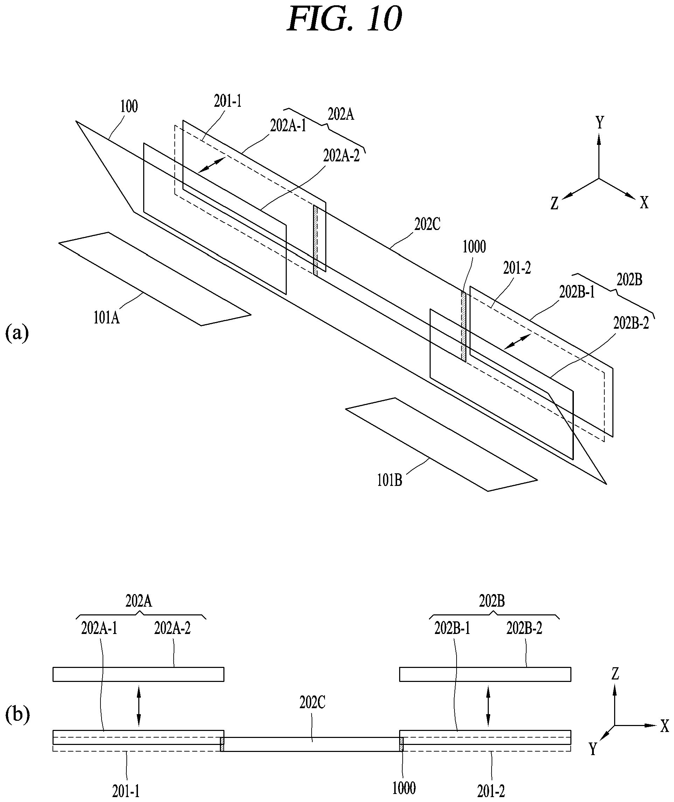

FIG. 10 shows an example of a case where a background image is displayed in an integrated display area disposed by connecting at least one virtual image and at least one real image, and 3D image information that can move in a depth direction is displayed through at least one foreground display that displays 3D image information that overlaps with at least a portion of the background screen.

First, referring to (a) of FIG. 10, as shown in (a) of FIG. 10, two first displays 101A, 101B and one second display 102 (not shown for convenience of explanation) may be disposed to cross each other with respect to the semi-transmissive mirror 100. Then, image light emitted from either one 101A of the first displays 101A, 101B may be reflected on a front surface of the semi-transmissive mirror 100 to form a first virtual image 201-1 spaced apart by a predetermined distance from the semi-transmissive mirror behind the semi-transmissive mirror 100. In addition, image light emitted from the other one 101B of the first displays 101A, 101B may be reflected on a front side of the semi-transmissive mirror 100 to form a second virtual image 201-2 spaced apart by a predetermined distance from the semi-transmissive mirror behind the semi-transmissive mirror 100.

Here, the first displays 101A, 101B disposed in front of the semi-transmissive mirror 100 may be disposed at a lower or upper side of the gaze direction 200 so as not to block the gaze direction 200 (or an opening direction of the housing 150). In this case, the first displays 101A, 101B may be disposed at a lower front side or upper front side of the semi-transmissive mirror 100.

Then, as shown in (a) of FIG. 10, the semi-transmissive mirror 100 may be disposed to be inclined so as to allow a front surface to be tilted at a lower or upper side in a direction in which the first displays 101A, 101B are disposed, that is, in the gaze direction 200. In addition, the semi-transmissive mirror 100 may be disposed to be inclined at an angle so as to allow virtual images 201-1, 201-2 formed by the semi-transmissive mirror 100 to be formed in a direction facing the gaze direction 200. In the following description, for convenience of description, it is assumed that the first displays 101A, 101B are disposed at a lower front side of the semi-transmissive mirror 100. However, the present disclosure is of course not limited thereto.

Meanwhile, as described above, since two first displays 101A, 101B and one second display 102 are disposed to cross each other with respect to the semi-transmissive mirror 100, the second display 102 may be disposed to cross alternately with the two first displays 101A, 101B. Therefore, on the Z-axis, one second display 102 may be disposed behind the semi-transmissive mirror 100 between two first displays 101A, 101B disposed in front of the semi-transmissive mirror 100.

Accordingly, as shown in (a) of FIG. 10, a real image 202C formed from one second display 102 may be formed between the first virtual image 201-1 and the second virtual image 201-2 formed from two first displays 101A, 101B. In this case, the respective first displays 101A, 101B may be disposed to be spaced apart from the semi-transmissive mirror 100 so as to allow the first virtual image 201-1 and the second virtual image 201-2 to be formed at a distance on the Z-axis corresponding to a distance to the semi-transmissive mirror 100 where the real image 202C is formed. Accordingly, the first virtual image 201-1, the real image 202C, and the second virtual image 201-2 may be formed at positions spaced apart from a rear surface of the semi-transmissive mirror 100 by the same distance in a Z-axis direction (driver's gaze direction).

Therefore, as shown in (b) of FIG. 10, the first virtual image 201-1, the real image 202C, and the second virtual image 201-2 may be aligned side by side in one axis (X-axis) direction along the semi-transmissive mirror 100.

Meanwhile, the first virtual image 201-1, the real image 202C, and the second virtual image 201-2 formed from images output from the first-1 display 101A, the second display 102, and the first-2 display 101B, respectively, may be connected to one another as shown above in (b) of FIG. 10. That is, such as in a pillar-to-pillar (P2P) display, including a plurality of displays, image information output from the respective displays may be connected to one another to generate an integrated display area with an extended display area in the X-axis direction.

Here, a virtual image formed by the semi-transmissive mirror 100 is reversed left and right due to reflection. Accordingly, the first-1 display 101A and the first-2 display 101B may each output a left-right reversed image. Then, due to a left-right reversal caused by reflection, the images output from the three displays may be connected and displayed in one direction.

Meanwhile, as shown in (b) of FIG. 10, the first virtual image 201-1, the real image 202C, and the second virtual image 201-2 may be connected to one another according to an edge blending technique.

Here, the edge blending technique, which is a technique for removing a non-display area, such as a bezel area, formed at an edge of a display area and where no image is displayed, may refer to an image processing technique that removes edge portions of respective images where the non-display areas are formed by overlapping each other.

However, the edge blending technique, which removes the non-display area through overlapping images, cannot be applied when a plurality of displays having a physical circuit and a thickness due to the circuit are connected due to a physical bezel area disposed at an edge of a circuit of each of the displays. This is a physical bezel area of each display, which is difficult to overlap between images by skipping the physical bezel area of each display.

However, the display device 1 according to an embodiment of the present disclosure has a configuration in which a virtual image and a real image formed through the semi-transmissive mirror 100 optically overlap. That is, since the displays has a structure disposed to cross alternately in front of and behind the semi-transmissive mirror 100 around an axis (X-axis) according to the semi-transmissive mirror 100, a physical Z-axis position of the first display 101 that emits an image corresponding to the virtual image and a physical Z-axis position of the second display 102 that emits an image corresponding to the real image may be different from each other. Therefore, physical overlapping between the first display 101 and the second display 102 may not occur.

Meanwhile, when displays are disposed alternately in front of and behind the semi-transmissive mirror 100 with the semi-transmissive mirror 100 at the center as shown in the foregoing display disposition structure, a virtual image reflected through the semi-transmissive mirror 100 and a real image transmitted through the semi-transmissive mirror 100 may overlap each other. Therefore, by overlapping optical images formed through the semi-transmissive mirror 100, overlapping the optical images is allowed without physical overlapping. Thus, it may be possible to apply an edge blending technique using overlapping of images regardless of a physical thickness and bezel area of a display, and through the edge blending technique, images displayed on respective displays may be connected to one another and displayed into an extended screen without a non-display area.

For an image synthesis according to such an edge blending technique, one side (e.g., left) edge area of the real image 202C along the X-axis may overlap the other side (e.g., right) edge area of the first virtual image 201-1. Additionally, the other side (e.g., right) edge area of the real image 202C may also overlap one side (e.g., left) edge area of the second virtual image 201-2. Furthermore, respective overlapping areas 1000 may be synthesized according to the edge blending technique, and thus the first virtual image 201-1, the real image 202C, and the second virtual image 201-2 may be connected into a single image.

Here, the edge area of each of the overlapping images may be an area corresponding to a preset number of pixels. As an example, the edge area may be an area corresponding to 10 pixels. In this case, the positions of the first-1 display 101-1, the second display 102, and the first-2 display 101-2 on the X-axis may be determined in such a manner that a right edge of the first-1 display 101-1 and a left edge of the second display 102, and a right edge of the second display 102 and a left edge of the first-2 display 101-2 overlap by an area corresponding to 10 pixels, respectively.

In this manner, the first virtual image 201-1 formed by the first-1 display 101A, the real image 202C formed by the second display 102, and the first virtual image 201-2 formed by the first-2 display 101B may be connected to one another with an overlapping edge area at the center to generate an integrated display area that displays a single screen. Furthermore, the generated integrated display area may be an area that displays a background screen that is displayed by overlapping 3D image information in the display device 1 according to an embodiment of the present disclosure. That is, the first-1 display 101A, the second display 102, and the first-2 display 101B may operate as a background display that displays a background screen.

Meanwhile, a foreground display may be further disposed so as to allow a real image 202A including 3D image information to overlap at least one of the virtual images 201-1, 201-2 including the background screen. In this case, when the first displays 101A, 101-B, that is, a background display, is disposed in front of the semi-transmissive mirror 100 to display a virtual background screen as shown in (a) of FIG. 10, the second displays (102A: a second display that displays the first real image 202A, hereinafter referred to as the second-1 display, 102B: a second display that displays the second real image 202B, hereinafter referred to as the second-2 display) may be disposed as a foreground display behind the semi-transmissive mirror 100 so as to allow the real images 202A, 202B that overlap at least partially with the virtual images 201-1, 201-2 to be formed. Furthermore, the second displays 102A, 102B may be displays disposed to be movable by driving the display position changer 103.

Accordingly, depending on the movement of the second-1 display 102A, the first real image 202A may move from the first-1 position 202A-1 to the first-2 position 202A-2, or conversely, from the first-2 position 202A-2 to the first-1 position 202A-1. In addition, depending on the movement of the second-2 display 102B, the second real image 202B may move from the second-1 position (202B-1) to the second-2 position (202B-2), or conversely, from the second-2 position (202B-2) to the second-1 position (202B-1).

Furthermore, depending on the movement of the real images 202A, 202B, a movement of the image information included in respective real images 202A, 202B may further reflect a movement in a direction of one axis (Z-axis) according to a gaze direction (or an opening direction of the housing 150).

As an example, image information displayed through the first real image 202A may be image information moving toward the center of the first image 202A along the X-axis direction or the Y-axis direction. In this case, the image information may be moved in the Z-axis direction along the moving second-1 display 102A as well as in the X-axis or Y-axis direction. Accordingly, when the second-1 display 102A is moved while the image information is moving in the X-axis direction or the Y-axis direction, the image information may be displayed to move in a direction in which the X-axis and Z-axis directions are synthesized, or a direction in which the Y-axis and Z-axis directions are synthesized. Accordingly, while at the same time moving in the X-axis or Y-axis direction, image information having a stereoscopic movement that approaches the driver or passenger may be displayed.

Meanwhile, in the foregoing description, it has been described as an example in which two virtual images 201-1, 201-2 and one real image 202C disposed between the two virtual images 201-1, 201-2 are connected into a single image to generate an integrated display area that displays a background screen. However, on the contrary, an integrated display area that displays the background screen by connecting two real images and one virtual image disposed between the two real images into a single image may of course be generated.

In this case, displays that generate virtual images that overlap the two real images may be disposed as a foreground display. That is, two second displays and one first display that display images that generate the integrated display area may be disposed as a background display, and two first displays may be disposed as a foreground display at a position on the X-axis (one axis formed with respect to the semi-transmissive mirror 100) that overlaps each of the two second displays.

In this case, the second display, which is a display disposed behind the semi-transmissive mirror 100, may be a fixed display, and the first display, which is a display disposed at a lower front side of the semi-transmissive mirror 100, may be a display disposed to be movable according to a driving of the display position changer 103.

Then, the first display may move in a direction closer to the semi-transmissive mirror 100 or away from the semi-transmissive mirror 100. In this case, the first display is disposed at a lower side with respect to the gaze direction 200, and the semi-transmissive mirror 100 is disposed to be tilted at a predetermined angle toward the first display, so the first display may be a display disposed to be movable up and down with respect to the gaze direction 200.

Meanwhile, when the first display is moved in a top-down direction, a virtual image formed behind the semi-transmissive mirror 100 may move in a direction closer to the semi-transmissive mirror 100 or away from the semi-transmissive mirror 100 according to the movement of the first display. Accordingly, image information moving in the X-axis or Y-axis direction on the first display moving in the up-and-down direction may be displayed as image information (3D image information) having a stereoscopic movement that approaches the driver or passenger while moving in the X-axis or Y-axis direction.

Meanwhile, the foreground display may be disposed in front of the driver seat or in front of the passenger seat, and may be configured to output 3D image information to the driver or passenger riding in the passenger seat. In this case, both the first display 101 and the second display 102 may be disposed in front of the driver seat and in front of the passenger seat, and either one of the first display 101 and the second display 102 may be disposed between the displays corresponding to the front of the driver seat and the displays corresponding to the front of the passenger seat.

Furthermore, either one of the first display 101 and the second display 102 disposed in front of the driver seat and in front of the passenger seat may be formed to display a background screen as a fixed display (background display). In addition, the other one of the first display 101 and the second display 102 disposed in front of the driver seat and in front of the passenger seat may be formed to display 3D image information as a display (foreground display) that is disposed to be movable.

Meanwhile, either one of the first and second displays may be a transparent display. As an example, when a background display is a first display, a second display, which is a foreground display, may be a transparent display. Alternately, conversely, when a background display is a second display, a first display, which is a foreground display, may be a transparent display.

Meanwhile, in the foregoing description, it has been described that either one of the first display 101 and the second display 102 moves in a direction closer to or away from the semi-transmissive mirror 100 to form a depth value. However, in addition, a third display may be further disposed between the first display 101 and the semi-transmissive mirror 100 or between the second display 102 and the semi-transmissive mirror 100. In this case, as the third display moves in a direction closer to or away from the semi-transmissive mirror 100, image information that overlaps the image information formed from the first and second displays 101, 102 may be output, and a stereoscopic effect separate from the stereoscopic effect (Z-direction stereoscopic effect) formed by the image information displayed on the first and second displays 101, 102 may be formed. In this case, a multi-stereoscopic effect may occur due to the image information displayed on the third display. Hereinafter, an embodiment of the present disclosure further including a third display will be referred to as a third embodiment.

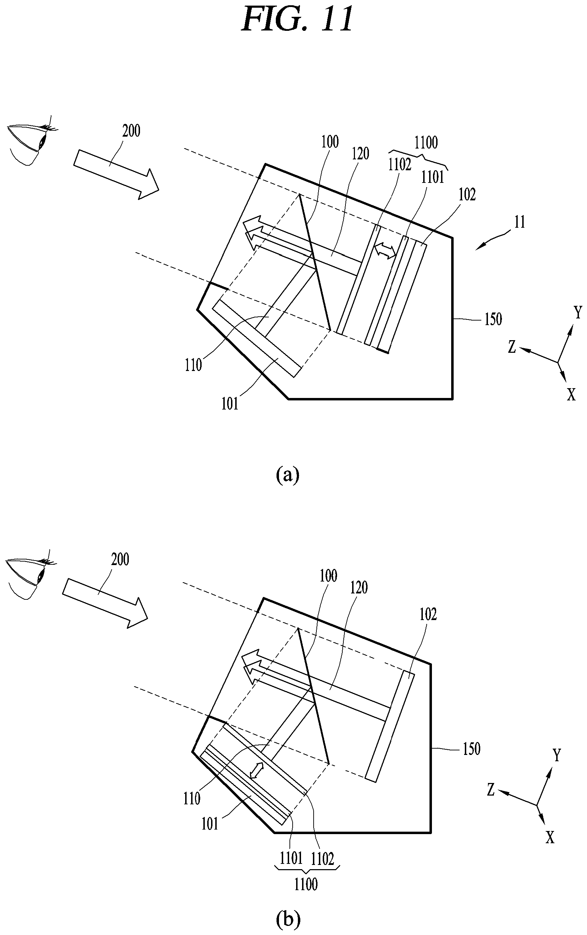

FIG. 11 shows examples of display devices according to such an embodiment of the present disclosure.

First, referring to (a) of FIG. 11, which shows an example in which a third display is disposed between the semi-transmissive mirror 100 and the second display 102, the third display 1100 may be disposed to be movable by driving the display position changer 103 between a first position 1101 close to the second display 102 and a second position 1102 close to the semi-transmissive mirror 100.

Meanwhile, the first display 101 and the second display 102 may be fixed displays. In this case, a virtual image formed by the image light emitted from the first display 101 being reflected by the semi-transmissive mirror 100 and a real image formed by the image light emitted from the second display 102 being transmitted by the semi-transmissive mirror 100 may be synthesized through the semi-transmissive mirror 100 to form a background screen. In this case, the first and second displays 101, 102 may be a background display, and the third display 1100 may be a foreground display.

Alternatively, either one of the first display 101 and the second display 102 may be a display disposed to be movable by driving the display position changer 103. In this case, the either one of the displays may display image information moving in the Z-axis direction on a background screen formed by image light emitted from another display as it approaches or moves away from the semi-transmissive mirror 100. In this case, either one of the first display 101 and the second display 102 may be a foreground display, and the other one may be a background display.

Meanwhile, as shown above in (a) of FIG. 11, when the third display 1100 is disposed to be movable in a direction away from or closer to the semi-transmissive mirror 100, image light displayed on the third display 1100 may move in a direction toward or away from the driver or passenger. In this case, when not only either one of the first and second displays 101, 102 but also the third display 1100 is disposed to be movable, the display device according to an embodiment of the present disclosure may have two foreground displays that display image information that moves in the Z-axis direction on a background screen. Accordingly, image information on either one of the first and second displays 101, 102 moving in the Z-axis direction, as well as image information on the third display 1100 moving in the Z-axis direction, may be displayed on one background screen. That is, image information having multi-stereoscopic information in which a plurality of image information having different Z-axis movements are displayed simultaneously may be displayed through the semi-transmissive mirror 100.

Meanwhile, in the foregoing description in (a) of FIG. 11, it has been described an example in which the third display 1100 is disposed between the semi-transmissive mirror 100 and the second display 102, but the third display 1100 may of course be disposed between the semi-transmissive mirror 100 and the first display 101. (b) of FIG. 11 shows an example of such a case.

Referring to (b) of FIG. 11, the third display 1100 may be disposed between the first display 101 and the semi-transmissive mirror 100 disposed at a lower side of the gaze direction 200, that is, the opening direction of the housing 150. Furthermore, it may be disposed to be movable by driving the display position changer 103 between the first position 1101 close to the first display 101 and the second position 1102 close to the semi-transmissive mirror 100.

Accordingly, as shown in (b) of FIG. 11, when the third display 1100 is disposed between the first display 101 and the semi-transmissive mirror 100, the third display 1100 may be disposed at a lower side of the opening direction (gaze direction 200) like the first display 101, and may be disposed to be movable in a direction perpendicular to the opening direction of the housing 150. In addition, when the first display 101 is disposed to be inclined at a predetermined angle (approximately 44 degrees) with respect to the opening direction, the third display 1100 may also be disposed to be inclined at the same angle.

Meanwhile, in order to prevent the third display 1100 from blocking between image light displayed on the first display 101 or the second display 102 and the semi-transmissive mirror 100, the third display 1100 may be implemented as a transparent display. In this case, the image light emitted from the first display 101 and the image light emitted from the second display 102 may each pass through the third display 1100 to be incident on a front or rear surface of the semi-transmissive mirror 100.

Meanwhile, the plurality of third displays may of course be disposed. For example, as shown in the FIGS. 7 to 10, when at least one first display or at least one second display is disposed along one axis (X-axis) formed with respect to the semi-transmissive mirror 100, at least one third display 1100 may of course be disposed between the first display 101 and the semi-transmissive mirror 100 or between the third display 1100 and the semi-transmissive mirror 100 along the X-axis formed with respect to the semi-transmissive mirror 100. In this case, the third display 1100 may be disposed alternately with respect to the X-axis depending on the disposition state of the first and second displays 101, 102.

The foregoing present disclosure may be implemented as codes readable by a computer on a medium written by the program. The computer-readable media may include all kinds of recording apparatuses in which data readable by a computer system is stored. Examples of the computer-readable media may include a hard disk drive (HDD), a solid state disk (SSD), a silicon disk drive (SDD), a ROM, a RAM, a CD-ROM, a magnetic tape, a floppy disk, an optical data storage device, and the like, and also include a device implemented in the form of a carrier wave (e.g., transmission via the Internet). Therefore, the above detailed description is therefore to be construed in all aspects as illustrative and not restrictive. The scope of the disclosure should be determined by reasonable interpretation of the appended claims and all changes that come within the equivalent scope of the disclosure are included in the scope of the disclosure.

## Claims

1. A vehicle display device, the display device comprising:
a light synthesizer that synthesizes a first image formed by reflecting incident light and a second image formed by transmitting incident light to form an image;
at least one first display disposed at a front surface side of the light synthesizer to output an image reflected by the light synthesizer;
at least one second display disposed at a rear surface side of the light synthesizer to output an image transmitted by the light synthesizer;
a position changer that moves at least one of the first and second displays in a direction closer to or away from the light synthesizer; and
a processor that controls the position changer to move at least one of the first and second displays such that either one of the first image and the second image, which includes a background screen, and the other one, which includes image information displayed to overlap the background screen are away from or closer to each other.

2. The display device of claim 1, comprising:
a housing that accommodates the light synthesizer and the first and second displays, and has an opening surface disposed on one side thereof to face the light synthesizer from a preset driver's eye height,
wherein the first display is disposed at an upper or lower side of an opening direction of the opening surface, and
wherein the second display is disposed so as to face the opening direction.

3. The display device of claim 2, wherein of the first and second displays, a background display that displays the background screen is a fixed display, and
wherein of the first and second displays, a foreground display that displays image information displayed to overlap the background screen is disposed to be movable according to a driving of the position changer.

4. The display device of claim 3, wherein the foreground display is the second display, and
wherein the position changer moves the second display in a direction closer to or away from a rear surface of the light synthesizer along the opening direction.

5. The display device of claim 3, wherein the foreground display is the first display, and
wherein the position changer moves the first display in a direction perpendicular to the opening direction so as to move closer to or away from a front surface of the light synthesizer.

6. The display device of claim 2, wherein the first display is disposed at a lower side of the opening direction of the opening surface, and disposed to be inclined at a preset angle with respect to the opening direction.

7. The display device of claim 1, wherein the light synthesizer is a semi-transmissive mirror including a front surface formed with a reflective surface on which incident light is reflected, and a rear surface formed with a transmissive surface through which incident light is transmitted,
wherein the first image is a virtual image formed by reflecting incident light on a front surface of the semi-transmissive mirror, and
wherein the second image is a real image formed by transmitting incident light on a rear surface of the semi-transmissive mirror.

8. The display device of claim 7, wherein a light transmittance of the semi-transmissive mirror is adjusted so as to allow a brightness of the virtual image and a brightness of the real image to be the same.

9. The display device of claim 3, wherein either one of the first and second displays is a background display having a horizontal length corresponding to a front surface of a driver seat and a front surface of a passenger seat of the vehicle, and
wherein the other one of the first and second displays is a foreground display having a horizontal length corresponding to either one of the front surface of the driver seat or the front surface of the passenger seat.

10. The display device of claim 9, wherein the position changer is disposed to further move the foreground display in one axial direction formed along the light synthesizer, and
wherein the processor controls the position changer to move the foreground display in one axial direction formed along the light synthesizer so as to allow the foreground display to be positioned at either one of the front surface of the driver seat or the front surface of the passenger seat, and move the foreground display in a direction closer to or away from the light synthesizer so as to allow image information displayed on the foreground display to have a stereoscopic effect according to a movement in a depth direction.

11. The display device of claim 9, comprising:
a first foreground display disposed on a front surface of the driver seat and a second foreground display disposed on a front surface of the passenger seat,
wherein the processor separately controls the first and second foreground displays so as to display separate image information having a different depth.

12. The display device of claim 3, comprising:
at least one first display, and at least one second display disposed alternately with the at least one first display with respect to the light synthesizer, as a background display that displays the background screen,
wherein at least one first image formed by the at least one first display and at least one second image formed by the at least one second display are connected to each other to display the background screen.

13. The display device of claim 12, comprising:
at least one second display forming at least one second image to overlap the at least one first image, respectively, or at least one first display forming at least one first image to overlap the at least one second image, respectively, as a foreground display that displays image information having a stereoscopic effect according to a movement in a depth direction with respect to the background screen.

14. The display device of claim 12, wherein the at least one first display is disposed to be spaced apart by a predetermined distance from a reflective surface of the light synthesizer so as to form each first image at a distance equal to a distance between each second image from a transmissive surface of the light synthesizer, and
wherein the at least one first image and the at least one second image are aligned side by side along one axis formed with respect to the light synthesizer so as to be spaced apart by the same distance from the transmissive surface of the light synthesizer.

15. The display device of claim 12, wherein the at least one first display and the at least one second display are disposed alternately with respect to the light synthesizer so as to allow an edge area of the first display that displays an image corresponding to the first image and an edge area of the second display that displays an image corresponding to the second image to overlap on one axis formed with respect to the light synthesizer.

16. The display device of claim 1, wherein the first display outputs a left-right reversed image.

17. The display device of claim 2, wherein the housing is at least part of an internal frame of a vehicle constituting at least one of a front of a driver seat and a front of a passenger seat of the vehicle.

18. The display device of claim 1, further comprising:
at least one third display disposed between the at least one first display and the light synthesizer or between the at least one second display and the light synthesizer,
wherein the position changer is disposed to further move the third display in a direction closer to or away from the light synthesizer, and
wherein the processor controls the position changer to allow the third display to move away from or closer to at least one of the first image and the second image.

19. The display device of claim 18, wherein the at least one third display is a transparent display.
